# FASCICULE DE BREVET EUROPEEN

(11) **EP 1 452 695 B1**
(45) Date de publication et mention de la délivrance du brevet: **23.08.2006**
(21) Numéro de dépôt: 04290394.8
(22) Date de dépôt: 13.02.2004
(51) Int. Cl.: F01D 11/00, F01D 5/18

(54) **Aube de turbine refroidie à fuite d'air de refroidissement réduite**
Mit verringertem Kühlluftdurchstrom gekühlte Turbinenschaufel
Cooled turbine blade having reduced cooling air leakage

(30) Priorité: 18.02.2003 FR 0301916
(43) Date de publication de la demande: 01.09.2004
(73) Titulaire: SNECMA, 75015 Paris (FR)
(72) Inventeur: Schwartz, Eric, 77720 Bombon (FR); Dubois, Laurent, 77190 Dammarie les Lys (FR); Redon, Damien, 92130 Issy les Moulineaux (FR)
(74) Mandataire: David, Alain

(56) Documents cités:
- EP-A- 0 860 587
- EP-A- 1 160 418
- US-B1- 6 345 494

## Description

### Domaine de l'invention

La présente invention se rapporte au domaine général des aubages de turbine de turbomachine, et plus particulièrement aux aubes de turbine munies de circuits de refroidissement intégrés.

### Art antérieur

De façon connue en soi, une turbomachine comporte une chambre de combustion dans laquelle de l'air et du carburant sont mélangés avant d'y être brûlés. Les gaz issus de cette combustion s'écoulent vers l'aval de la chambre de combustion et alimentent ensuite une turbine haute pression et une turbine basse pression. chaque turbine comporte une ou plusieurs rangées d'aubes fixes (appelées distributeurs) alternant avec une ou plusieurs rangées d'aubes mobiles (appelées roues mobiles), espacées de façon circonférentielle tout autour du rotor de la turbine. Ces aubes de turbine sont soumises aux températures très élevées des gaz de combustion, lesquelles atteignent des valeurs largement supérieures à celles que peuvent supporter sans dommages les aubes qui sont en contact direct avec ces gaz, ce qui a pour conséquence de limiter leur durée de vie.

Afin de résoudre ce problème, il est connu de munir ces aubes de circuits de refroidissement internes visant à réduire la température de ces dernières en créant, à l'intérieur de l'aube, une circulation organisée de cet air et, dans la paroi de l'aube, des perforations destinées à générer un film protecteur pour cette aube.

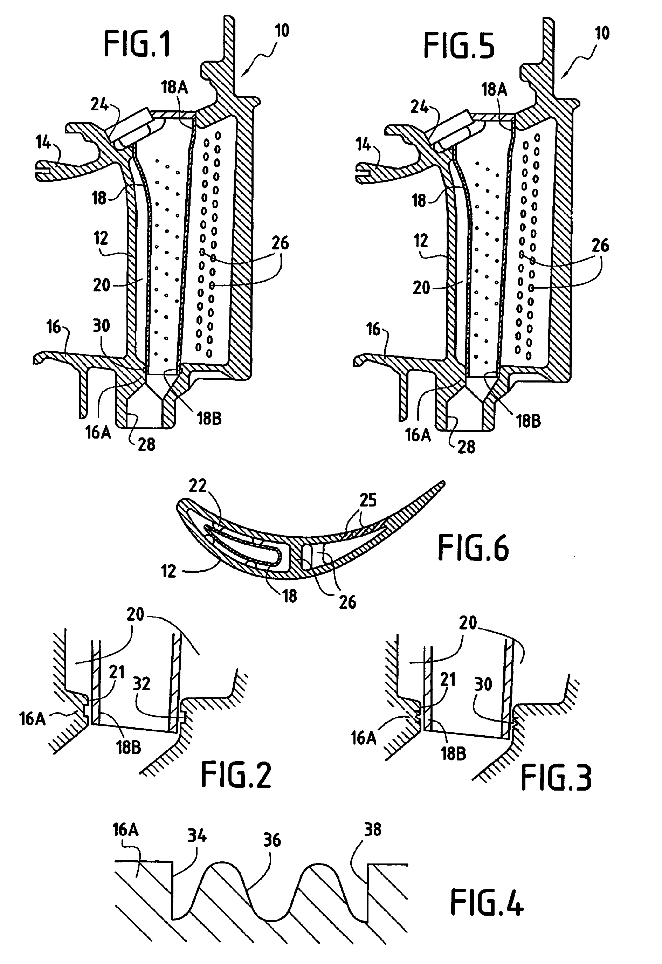

Les figures 5 et 6 illustrent une structure d'aube refroidie conventionnelle du type à chemise équipant actuellement certains moteurs aéronautiques.

L'aube 10 qui comporte une pale creuse 12, insérée entre une plate-forme externe 14 et une plate-forme interne 16, comporte une chemise 18 qui définit une cavité périphérique annulaire 20 entre la paroi interne de la pale et l'extérieur de la chemise. A sa partie supérieure 18A, cette chemise est fixée de façon étanche sur la plate-forme externe de l'aube par soudure ou brasure et sa partie inférieure 18B vient s'encastrer dans la plate-forme interne de l'aube au niveau d'une zone de guidage 16A, en laissant un jeu déterminé nécessaire au montage et au coulissement de la chemise sous les effets de la dilatation thermique. Selon la configuration envisagée, des plots 22 solidaires de la paroi interne ou formés par des bossages de la chemise maintiennent un écartement constant entre la chemise et cette paroi interne.

La chemise 18 est du type multiperforée de sorte que le débit d'air de refroidissement délivré par une source d'air sous pression, en général le compresseur de la turbomachine, pénètre dans la plate-forme externe 14 par un orifice d'entrée 24, arrive à l'intérieur de la chemise 18 et s'échappe en partie par la multiperforation de la chemise en formant dans la cavité périphérique 20 des jets d'air qui refroidissent par impact la paroi interne de la pale 12, puis sont évacués par des perçages calibrés 25 réalisés sur le bord de fuite ou sur la face intrados de cette pale afin de former un film d'air protecteur (des pontets 26 peuvent être prévus à l'intérieur de la pale pour y aménager la circulation de l'air de refroidissement). Le débit d'air restant sort par la plate-forme interne 16 qu'il traverse en la refroidissant pour s'échapper par un orifice de sortie 28 à l'extérieur de l'aube vers d'autres organes du moteur à refroidir.

Du fait du jeu existant entre la partie inférieure de la chemise 18B et la zone 16A de la plate-forme interne sur laquelle coulisse cette chemise, il se produit nécessairement une fuite d'air de refroidissement dont la conséquence dépend de l'équilibre des pressions entre la sortie de la chemise au niveau de sa partie inférieure 18A et la cavité périphérique 20. Ainsi, si la pression en sortie chemise est supérieure à la pression existant dans la cavité, un débit d'air remontera dans cette cavité diminuant d'autant le débit pour la ventilation des organes externes et de l'aubage. Inversement, avec une pression plus faible en sortie chemise, l'air ayant participé au refroidissement de la paroi interne de la chemise viendra alimenter le flux de ventilation des organes externes, ce qui constitue une gêne gravement pénalisante pour la durée de vie du moteur, du fait de l'augmentation de sa température réalisée au contact de la paroi de l'aube. Une aube de turbomachine est également divulguée dans le document EP-A-1160418.

### Objet et résumé de l'invention

La présente invention vise donc à pallier les inconvénients liés à ces fuites d'air de refroidissement en proposant une aube de turbine qui les réduit de façon notable sans l'introduction d'un système d'étanchéité complémentaire qui présente l'inconvénient majeur de freiner le coulissement de la chemise. L'invention a pour objet également de réaliser une aube dont la géométrie et donc le processus de fabrication est très peu modifié par rapport au processus de fabrication traditionnelle en fonderie, de façon à éviter toute dégradation dans la tenue mécanique générale de cette aube. Elle vise enfin toute turbine de turbomachine équipée de telles aubes refroidies.

A cet effet, il est prévu une aube de turbine de turbomachine comprenant une chemise multiperforée définissant une cavité annulaire entre une paroi extérieure de cette chemise et une paroi interne de l'aube, une ouverture d'admission d'air pour alimenter l'intérieur de cette chemise en air de refroidissement et une ouverture d'évacuation d'air pour évacuer une partie de cet air de refroidissement à l'extérieur de l'aube, la chemise étant solidaire de l'aube à une extrémité et à une autre extrémité libre de coulisser le long d'un bord interne de l'aube sous les effets de la dilation thermique relative entre la chemise et la paroi interne de l'aube, l'espace annulaire entre cette extrémité libre de la chemise et le bord interne de l'aube définissant une zone de fuite pour l'air de refroidissement, caractérisée en ce que ledit bord interne comporte un évidement pour créer une perte de charge dans ladite zone de fuite de façon à réduire le débit d'air de refroidissement la traversant.

De la sorte, en créant des pertes de charges dans la zone de fuite, le débit traversant cette fuite d'air de refroidissement est fortement diminué. Ainsi, cette géométrie particulière de la section de guidage de la chemise permet d'abaisser d'environ 25% le débit de fuite constaté habituellement sur ce type d'aube chemisée sans modifier le processus de fabrication de l'aube (seul le moule à noyau de la plate-forme interne doit être modifié de façon mineure). En outre, l'absence de tout système d'étanchéité permet de ne pas nuire au coulissement de la chemise dans l'aube.

Selon le mode de réalisation envisagé, ledit évidement est réalisé sur tout ou partie de la périphérie dudit bord interne et présente avantageusement une géométrie de révolution. Il peut constituer en une encoche rectangulaire ou bien une encoche alvéolée comportant de préférence au moins une alvéole.

L'invention concerne également toute turbine de turbomachine munie d'une pluralité d'aubes refroidies telles que précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une vue en perspective d'une aube de distributeur de turbine selon l'invention,
- la figure 2 est une vue de détail de la figure 1 au niveau d'une zone de fuite dans un premier mode de réalisation de l'invention,
- la figure 3 est une vue de détail de la figure 1 au niveau d'une zone de fuite dans un second mode de réalisation de l'invention,
- la figure 4 est une loupe de la figure 3,
- la figure 5 est une vue en perspective d'une aube de distributeur de turbine de l'art antérieur, et
- la figure 6 est une vue en coupe de l'aube de la figure 5.

### Description détaillée d'un mode de réalisation

La figure 1 représente en perspective un aubage refroidi 10, par exemple une aube de distributeur de turbine d'une turbomachine conforme à la présente invention. Cette aube formée d'une pale creuse 12 montée entre une plate-forme externe 14 et une plate-forme interne 16 est fixée sur un carter (non représenté) de la turbine par l'intermédiaire de la plate-forme externe définissant une paroi externe pour la veine d'écoulement des gaz de combustion au travers de la turbine, la paroi interne de la veine d'écoulement étant défini par la plate-forme interne de cette aube.

Une telle aube est soumise aux températures très élevées des gaz de combustion et nécessite donc d'être refroidie. A cet effet, et de façon connue en soi, l'aube 10 comporte au moins une chemise multiperforée 18, alimentée en air de refroidissement à l'une de ses extrémités radiales, et qui définit une cavité périphérique annulaire 20 entre la paroi interne de l'aube et la paroi extérieure de la chemise. A sa partie supérieure 18A, cette chemise est fixée de façon étanche sur la plate-forme externe 14 de l'aube par soudure ou brasure et, à sa partie inférieure 18B, elle vient s'encastrer dans la plate-forme interne 16 de l'aube au niveau d'une zone de guidage ou de coulissement 16A, en laissant un espace annulaire 21 créant un jeu déterminé, nécessaire au montage et au coulissement de la chemise en fonctionnement, compte tenu de l'évolution différente des températures des divers composants de l'aube et donc de leur dilatation relative, mais aussi une zone de fuite pour l'air de refroidissement. Des ouvertures d'admission d'air 24 et d'évacuation d'air 28 sont prévues aux niveau des plates-formes externe et interne respectivement pour la circulation de l'air de refroidissement.

Selon l'invention, il est proposé de créer des pertes de charge dans la zone de fuite de façon à réduire le débit d'air de refroidissement la traversant. Pour cela, et comme l'illustrent les modes de réalisation des figures 2 et 3, la zone de coulissement 16A de la partie inférieure de la chemise 18 sur la plate-forme interne 16 est pourvue d'un évidement 30 réalisé sur tout ou partie de la périphérie de cette zone, sous la forme d'une petite entaille ou encoche dont les formes et dimensions dépendront du débit de fuite souhaité. De préférence, cet évidement est à géométrie de révolution (ou circonférentiel), annulaire ou elliptique par exemple.

Sur la figure 2, cet évidement est formé simplement d'une encoche rectangulaire 32. Les inventeurs ont pu tester qu'avec cette géométrie élémentaire, l'augmentation des pertes de charge induite par l'encoche montre une réduction non négligeable du débit d'air de refroidissement dans la zone de fuite par rapport à la géométrie sans évidement de l'art antérieur. Ainsi, pour une encoche de 2 mm de largeur et de 0,6 mm de profondeur, cette réduction est de l'ordre de 12%.

Sur la figure 3, cet évidement est formé d'une encoche alvéolée dont la forme précise est illustrée en détail à la figure 4. Elle présente trois alvéoles 34, 36, 38 qui permettent de générer trois éclatements successifs du flux de fuite. Le nombre d'alvéoles et la forme de celles-ci n'est bien évidement aucunement limitatif et l'homme du métier, selon les caractéristiques de débit demandé, pourra décider de leur nombre et de leur forme. Ici encore, les inventeurs ont pu tester qu'avec une telle géométrie, l'augmentation des pertes de charge induite par cette encoche alvéolée montre une réduction non négligeable du débit d'air de refroidissement dans la zone de fuite, non seulement par rapport à la géométrie sans évidement de l'art antérieur, mais aussi par rapport à une encoche rectangulaire de même dimension. En effet, on obtient dans ce cas une réduction de débit de l'ordre de 25% (pratiquement le double du précédent), avec trois alvéoles de 0,6 mm de profondeur (à rayon de courbure 0,2 mm) dans une encoche de 2 mm de largeur.

Avec cette invention, le processus de fabrication de l'aube n'a pas à être modifié, il suffit seulement d'adapter de façon mineure à la forme d'évidement souhaitée le noyau du moule servant à la réalisation de la plate-forme interne de l'aube. De plus, l'absence d'introduction de joint ou tout autre système d'étanchéité dans la zone de fuite évite tout risque de blocage lors du coulissement de la chemise sous les effets de dilatation.

## Revendications

1. Aube de turbine de turbomachine comprenant une chemise multiperforée (18) définissant une cavité annulaire (20) entre une paroi extérieure de cette chemise et une paroi interne de l'aube (10), une ouverture d'admission d'air (24) pour alimenter l'intérieur de cette chemise en air de refroidissement et une ouverture d'évacuation d'air (28) pour évacuer une partie de cet air de refroidissement à l'extérieur de l'aube, la chemise étant solidaire de l'aube à une extrémité (18A) et à une autre extrémité (18B) libre de coulisser le long d'un bord interne (16A) de l'aube sous les effets de la dilation thermique relative entre la chemise et la paroi interne de l'aube, l'espace annulaire (21) entre cette extrémité libre de la chemise et le bord interne de l'aube définissant une zone de fuite pour l'air de refroidissement, **caractérisée en ce que** ledit bord interne (16A) comporte un évidement (30) pour créer une perte de charge dans ladite zone de fuite de façon à réduire le débit d'air de refroidissement la traversant.

2. Aube selon la revendication 1, **caractérisée en ce que** ledit évidement est réalisé sur tout ou partie de la périphérie dudit bord interne.

3. Aube selon la revendication 2, **caractérisée en ce que** ledit évidement présente une géométrie de révolution.

4. Aube selon la revendication 1, **caractérisée en ce que** ledit évidement comporte une encoche rectangulaire (32).

5. Aube selon la revendication 1, **caractérisée en ce que** ledit évidement comporte une encoche alvéolée (34, 36, 38).

6. Aube selon la revendication 5, **caractérisée en ce que** ladite encoche alvéolée comporte au moins une alvéole.

7. Turbine de turbomachine, **caractérisée en ce qu'**elle comporte une pluralité d'aubes refroidies (10) selon l'une quelconque des revendications précédentes.

## Claims

1. A turbomachine turbine vane including a multiply-perforated liner (18) defining an annular cavity (20) between an outside wall of the liner and an inside wall of the vane (10), an air admission opening (24) for feeding the inside of the liner with cooling air and an air exhaust opening (28) for exhausting a fraction of the cooling air from the vane, the liner being secured to the vane at one end (18A) and being free at its other end (18B) to slide along an inside edge (16A) of the vane under the effects of relative thermal expansion between the liner and the inside wall of the vane, the annular gap (21) between said free end of the liner and the inside edge of the vane defining a leakage zone for cooling air, the vane being **characterised in that** said inside edge (16A) includes a recess (30) for generating head loss in said leakage zone so as to reduce the flow rate of cooling air passing therethrough.

2. A vane according to claim 1, **characterised in that** said recess is made over all or part of the periphery of said inside edge.

3. A vane according to claim 2, **characterised in that** said recess is circularly symmetrical.

4. A vane according to claim 1, **characterised in that** said recess comprises a rectangular section groove (32).

5. A vane according to claim 1, **characterised in that** said recess comprises a corrugated section groove (34, 36, 38).

6. A vane according to claim 5, **characterised in that** said corrugated section groove includes at least one indentation.

7. A turbomachine turbine, **characterised in that** it includes a plurality of cooled vanes (10) according to any one of the preceding claims,

## Patentansprüche

1. Turbinenschaufel einer Turbomaschine umfassend einen mehrfach perforierten Mantel (18), der eine ringförmige Aushöhlung (20) zwischen einer äußeren Wand dieses Mantels und einer inneren Wand der Schaufel (10) definiert, eine Lufteinlaßöffnung (24), um das Innere dieses Mantels mit Kühlluft zu versorgen und eine Luftabzugsöffnung (28) um einen Teil dieser Kühlluft aus der Schaufel heraus zu evakuieren, wobei der Mantel an einem Ende (18A) mit der Schaufel fest verbunden ist und an einem anderen Ende (18B) frei ist, entlang einer inneren Kante (16A) der Schaufel unter den Wirkungen der relativen Wärmedehnung zwischen dem Mantel und der inneren Wand der Schaufel zu gleiten, wobei der ringförmige Raum (21) zwischen diesem freien Ende des Mantels und der inneren Kante der Schaufel einen Verflüchtigungsbereich für die Kühlluft bildet, **dadurch gekennzeichnet, daß** die innere Kante (16A) eine Aussparung (30) umfaßt, um einen Druckverlust in dem sogenannten Verflüchtigungsbereich zu erzeugen, um den Durchsatz der Kühlluft, die ihn durchquert, zu reduzieren.

2. Schaufel nach Anspruch 1, **dadurch gekennzeichnet, daß** die Aussparung am ganzen oder an einem Teil des Umfangs der inneren Kante ausgebildet ist.

3. Schaufel nach Anspruch 2, **dadurch gekennzeichnet, daß** die Aussparung eine Rotationsgeometrie aufweist.

4. Schaufel nach Anspruch 1, **dadurch gekennzeichnet, daß** die Aussparung eine rechteckige Einkerbung (32) umfaßt.

5. Schaufel nach Anspruch 1, **dadurch gekennzeichnet, daß** die Aussparung eine wabenförmige Einkerbung (34, 36, 38) umfaßt.

6. Schaufel nach Anspruch 5, **dadurch gekennzeichnet, daß** die wabenförmige Einkerbung mindestens eine Zelle umfaßt.

7. Turbine einer Turbomaschine, **dadurch gekennzeichnet, daß** sie eine Mehrzahl gekühlter Schaufeln (10) nach einem der vorherigen Ansprüche umfaßt.
